# EUROPÄISCHE PATENTSCHRIFT

(11) **EP 3 012 785 B1**
(45) Veröffentlichungstag und Bekanntmachung des Hinweises auf die Patenterteilung: **26.07.2017**
(21) Anmeldenummer: 15191148.4
(22) Anmeldetag: 23.10.2015
(51) Int. Cl.: G06K 19/06, G08B 1/08

(54) **VERFAHREN SOWIE AUSWERTEGERÄT ZUR AUSWERTUNG VON SIGNALEN EINER LED-ZUSTANDSANZEIGE**
METHOD AND EVALUATION DEVICE FOR EVALUATING SIGNALS OF A LED STATUS DISPLAY
PROCEDE ET ANALYSEUR DESTINES A ANALYSER DES SIGNAUX D'UN AFFICHAGE D'ETAT A DEL

(30) Priorität: 24.10.2014 CH 16382014
(43) Veröffentlichungstag der Anmeldung: 27.04.2016
(73) Patentinhaber: ELESTA GmbH, 7310 Bad Ragaz (CH)
(72) Erfinder: STEINER, Roman, 8725 Ernetschwil (CH); SULSER, André, 9442 Berneck (CH)
(74) Vertreter: Riederer Hasler & Partner Patentanwälte AG

(56) Entgegenhaltungen:
- DE-A1- 4 419 190
- DE-A1-102012 107 575
- US-A- 5 561 543
- US-A1- 2014 054 381

## Beschreibung

### Technisches Gebiet

Die Erfindung betrifft ein Verfahren zur Auswertung von Signalen einer LED-Zustandsanzeige eines Geräts. Von besonderem Interesse sind hierbei Sicherheitsgeräte, die zum Beispiel Teil eines Sicherheitssystems sein können. Darüber hinaus sind ein tragbares Auswertegerät sowie ein System zur Durchführung des Verfahrens Gegenstand der vorliegenden Erfindung.

### Stand der Technik

LED-Zustandsanzeigen sind eine kostengünstige Art von Status- bzw. Fehleranzeigen mit meist 1 bis 10 LEDs ("light-emitting diodes"). Normalerweise emittieren die LEDs der Anzeige im für das menschliche Auge sichtbaren Wellenlängen-Bereich und zeigen durch ihre Farbe und/oder Blinkfrequenz sowie die Auswahl der aktiven LEDs in der Zustandsanzeige den Status des mit der Zustandsanzeige versehenen Geräts an. Die einzelnen LEDs können mit einer Beschriftung versehen sein, die die Bedeutung einer Emission durch die verschiedenen LEDs erklärt. Dies ist insbesondere bei Geräten zum privaten Gebrauch, wie beispielsweise bei Druckern oder Kaffeemaschinen, üblich. Bei Geräten für den industriellen Einsatz wird nicht selten auf eine solche Legende verzichtet. Ist keine oder eine nicht ausreichend aussagekräftige Beschriftung vorhanden, so muss der Nutzer die durch die LEDs emittierten Signale mit einer Liste möglicher Signale vergleichen, um den angezeigten Geräte-Zustand zu identifizieren. Da das Ablesen der Zustandsanzeige direkt durch den Nutzer erfolgt, müssen die verschiedenen, durch die LEDs emittierten Signale durch das menschliche Auge wahrnehmbar und unterscheidbar sein. Dies hat nicht nur Auswirkungen auf die verwendbaren Wellenlängen sondern auch auf die Geschwindigkeit der Signalemission und damit der Auswertung.

Bei einer durch ein Patentamt durchgeführten Recherche ist die DE102012107575A1 aufgefunden worden, die ein Verfahren zur drahtlosen Übertragung von Informationen zwischen einer Schweissvorrichtung und einem tragbaren mobilen Zusatzgerät offenbart. Zur Durchführung des Verfahrens sind eine Sendeeinrichtung mit einem Anzeigeteil und eine Empfangseinrichtung mit einem Sensorteil vorgesehen, wobei Informationen am Anzeigeteil optisch angezeigt und vom Sensorteil optisch erfasst werden. Zu den am Anzeigeteil anzeigbaren Informationen gehören unter anderem auch Fehlercodes.

### Aufgabe der Erfindung

Es ist eine Aufgabe der vorliegenden Erfindung, ein Verfahren zur Auswertung von Signalen einer LED-Zustandsanzeige eines Geräts, sowie Hilfsmittel zur Durchführung des Verfahrens bereitzustellen. Das Verfahren soll eine vereinfachte und/oder schnellere Auswertung der Signale erlauben. Weitere Vorteile und Ziele der vorliegenden Erfindung ergeben sich aus der nachfolgenden Beschreibung.

### Darstellung der Erfindung

Die oben genannte Aufgabe wird gelöst durch ein Verfahren nach Anspruch 1 und ein Gerät nach Anspruch 9.

Offenbart ist unter anderem ein Verfahren zur Auswertung von Signalen einer Zustandsanzeige eines Geräts, das Teil einer Sicherheitseinrichtung ist. Das Verfahren umfasst die folgenden Schritte:
- Erfassen eines von der Zustandsanzeige emittierten Signals mittels einer Kamera (als Sensor) eines tragbaren Auswertegeräts,
- Vergleich des erfassten Signals mit Signalen, die in einer Datenbank gespeichert sind, wobei den gespeicherten Signalen in der Datenbank jeweils ein Zustand des Geräts zugeordnet ist, und
- Anzeigen von Informationen zum Zustand, der dem erfassten Signal zugeordnet ist, mittels einer Anzeigevorrichtung des tragbaren Auswertegeräts,
- wobei vorgesehen ist, dass das emittierte Signal in der Form wie es von der Zustandsanzeige emittiert wird, durch das menschliche Auge nicht oder nicht eindeutig von anderen von der Zustandsanzeige emittierbaren Signalen unterscheidbar ist.

Nachfolgend werden Merkmale beschrieben, wobei diese (individuell) als bevorzugte Merkmale zu betrachten sind, auch wenn sie nicht als solche bezeichnet werden. Die Merkmale seien separat (als Teil eines beliebigen Verfahrens zur Auswertung von Signalen einer Zustandsanzeige eines Geräts oder eines beliebigen tragbaren Auswertegeräts oder eines beliebigen Systems) oder - soweit sie sich nicht ausschliessen - in beliebiger Kombination offenbart.

Das Auswertegerät und/oder ein optionaler Server sind vorzugsweise zur Durchführung des in diesem Dokument beschriebenen Verfahrens oder von Teilen davon ausgebildet und/oder zur Durchführung des Verfahrens oder Teilen davon programmiert.

Es sei auch ein System zur Signalauswertung offenbart, beinhaltend ein Gerät mit einer Zustandsanzeige sowie ein tragbares Auswertegerät und optional einem Server, wobei das System und/oder dessen Teile mit Vorteil eines oder mehrere der in diesem Dokument beschriebenen Merkmale aufweisen und/ oder zur Durchführung des in diesem Dokument beschriebenen Verfahrens ausgebildet sind.

Das erfasste Signal wird ausgewertet. Zur Auswertung gehört der Vergleich des erfassten Signals mit Signalen, die in einer Datenbank gespeichert sind. Durch den Vergleich wird vorzugsweise ein gespeichertes Signal identifiziert, das dem erfassten Signal entspricht.

Den gespeicherten Signalen ist jeweils ein Zustand des Geräts zugeordnet.

Es sind mehrere unterschiedliche Zustände des Geräts vorgesehen, die den gespeicherten Signalen zugeordnet sind, wobei die Zustände ebenfalls in einer Datenbank gespeichert sind (gespeicherte Zustände), vorzugsweise in derselben Datenbank wie die gespeicherten Signale. Es kann also eine Datenbank vorgesehen sein, enthaltend eine Vielzahl von gespeicherten Signalen und eine Vielzahl von gespeicherten Zuständen, wobei die gespeicherten Zustände den gespeicherten Signalen zugeordnet sind.

Als Teil der Auswertung kann (in Abhängigkeit des Ergebnisses des Vergleichs des erfassten Signals mit den gespeicherten Signalen) eine Zuordnung des erfassten Signals zu einem gespeicherten Zustand des Geräts, insbesondere die Zuordnung zu einem definierten Fehler, erfolgen.

Beim Gerät kann es sich um ein stationäres Gerät handeln. Es kann z.B. in einem Gebäude installiert sein. Von besonderem Interesse ist ein Gerät, das Teil einer Sicherheitseinrichtung ist, beispielsweise ein Sicherheitsschalter oder ein Steuergerät.

Die Zustandsanzeige kann einen oder mehrere Emitter aufweisen. Der Emitter ist dazu ausgebildet, ein Signal (emittiertes Signal) oder einen Signalteil zu emittieren, vorzugsweise in Form elektromagnetischer Strahlung.

Die elektromagnetische Strahlung kann Strahlung im für das menschliche Auge sichtbaren (Licht, z.B. weisses, blaues, grünes, rotes oder gelbes Licht) und/oder unsichtbaren Wellenlängenbereich (z.B. Infrarotstrahlung oder Ultraviolettstrahlung) umfassen.

Als unterschiedliche Wellenlängenbereiche können z.B. folgende angesehen werden: Sichtbare Strahlung, unsichtbare Strahlung oder Unterkategorien davon. Unterkategorien sichtbarer Strahlung können vom menschlichen Auge als unterschiedliche Farben wahrnehmbare Strahlungen sein. Unterkategorien unsichtbarer Strahlung können Infrarotstrahlung und Ultraviolettshrahlung sein.

Dabei ist es möglich, dass der Emitter (in Bezug auf die emittierte Energiemenge) grösstenteils in einem der genannten Wellenlängenbereiche emittiert. Bezogen auf die emittierte Energiemenge kann der Emitter z.B. zu mindestens 50, 70 oder 90 Prozent in einem der genannten Wellenlängenbereiche emittieren.

Wie beschrieben, kann die Zustandsanzeige einen oder mehrere Emitter aufweisen, wobei sie vorzugsweise mindestens 2, 3 oder 5 und/oder höchstens 100, 50 oder 20 Emitter aufweist.

Die Emitter können dazu ausgebildet sein gemeinsam ein Signal (emittiertes Signal) zu emittieren und/ oder die einzelnen Emitter können dazu ausgebildet sein, jeweils einen Teil (Signalteil) des Signals (emittiertes Signal) zu emittieren.

Sind mehrere Emitter vorgesehen, so können unterschiedliche Emitter Strahlung (im Wesentlichen) im gleichen oder in unterschiedlichen Wellenlängenbereichen emittieren (z.B. gleichfarbiges Licht oder unterschiedlich farbiges Licht). Die Zustandsanzeige kann beispielsweise 2, 3, 4, 5 oder mehr unterschiedliche Emitter aufweisen, die sich in Bezug auf den jeweils emittierten Wellenlängenbereich unterscheiden. Die Emitter können, wie oben beschrieben, jeweils grösstenteils in einem Wellenlängenbereich emittieren.

Besonders bevorzugt handelt es sich bei den Emittern um LEDs ("light-emitting diodes"). Bei der Zustandsanzeige kann es sich demnach mit Vorteil um eine LED-Zustandsanzeige handeln.

Die Emitter können frei liegen oder vom Gehäuse des Geräts abgedeckt sein, wobei die Abdeckung für sichtbare Strahlung transparent oder intransparent sein kann. Ist der die Emitter abdeckende Teil des Gehäuses in dieser Weise intransparent, so sind die darunterliegenden Emitter und die von ihnen emittierten Signale durch das menschliche Auge nicht wahrnehmbar. Es können aber Emitter eingesetzt werden, die in einem nicht-sichtbaren Wellenlängenbereich emittieren, z.B. Infrarot-LEDs. Deren Emission kann dann mittels des Auswertegeräts auch durch das Gehäuse hindurch erfassbar sein.

Es ist von Vorteil, wenn die Zustandsanzeige dazu ausgebildet oder in der Lage ist, mindestens 2, 3, 5 oder 10 unterschiedliche Zustände des Geräts anzuzeigen und/oder zu diesem Zweck mindestens 2, 3, 5 oder 10 unterschiedliche Signale zu emittieren.

Einer der Zustände kann z.B. ein normaler Betriebszustand des Geräts sein. Es kann auch vorgesehen sein, dass einer der Zustände ein fehlerhafter, gestörter, defekter oder inaktiver Zustand des Geräts ist.

Ein Zustand - insbesondere ein fehlerhafter, gestörter, defekter oder inaktiver Zustand - kann auch durch die Absenz einer Emission angezeigt werden.

Beim emittierten Signal kann es sich um ein Signal in Form elektromagnetischer Strahlung handeln (vgl. oben).

Es kann vorgesehen sein, dass das Signal in der Form wie es von der Zustandsanzeige emittiert wird, durch menschliche Sinne (natürlich in Verbindung mit dem menschlichen Denkvermögen), insbesondere durch das menschliche Auge,
(A) nicht oder nicht eindeutig von anderen von der Zustandsanzeige emittierten Signalen unterscheidbar ist und/ oder
(B) nicht wahrnehmbar ist. Dies kann z.B. der Fall sein, wenn das Signal im nicht sichtbaren Wellenlängenbereich emittiert wird oder wenn die Emission und/oder das Signal zu kurz für eine Erfassung durch den Menschen ist. Ein Signal gemäss (A) oder (B) wird im Folgenden gemeinschaftlich als "durch den Menschen nicht erfassbares Signal" bezeichnet.

Das Signal kann vollständig von einem Emitter der Zustandsanzeige emittiert werden oder sich aus Emissionen von zwei oder mehr Emittern zusammensetzen.

Unabhängig davon kann es vorteilhaft sein, wenn das Signal von der Zustandsanzeige vollständig innerhalb von weniger als 10, 5, 3, 1 oder 0.5 Sekunden (im Folgenden als "Zeitintervall zur vollständigen Emission" bezeichnet) emittiert wird oder emittierbar ist. Optional kann nach Ablauf des Zeitintervalls zur vollständigen Emission (insbesondere innerhalb von 10, 5, 3, 1 oder 0.5 Sekunden nach Ablauf des genannten Zeitintervalls) die Emission des Signals beendet werden und/ oder die Emission desselben Signals oder eines anderen Signals beginnen. Dieser Vorgang kann mit Vorteil 1, 2, 3 oder mehr Male nacheinander durchgeführt werden.

Während ein Mensch ohne Hilfsmittel in dieser Zeit vielleicht nicht in der Lage ist, das Signal wahrzunehmen oder es von anderen Signalen zu unterscheiden (das Signal also ein durch den Menschen nicht erfassbares Signal darstellt), wird dies durch das tragbare Auswertegerät ermöglicht. Ein kurzes Zeitintervall zur vollständigen Emission spart Zeit.

Alternativ oder zusätzlich kann die vollständige Emission des Signals (d.h. das Zeitintervall zur vollständigen Emission) länger als 0.000001, 0.0001, 0.01,0.1,0.3, 0.5 oder 1 Sekunde dauern.

Optional kann nach dem Zeitintervall zur vollständigen Emission die Emission des Signals enden und/oder erneut beginnen.

Beim Zeitintervall (d.h. Zeitspanne) zur vollständigen Emission des Signals handelt es sich vorzugsweise um das minimale Zeitintervall zur vollständigen Emission des Signals.

Im Zusammenhang mit dem Zeitintervall zur vollständigen Emission heisst "vollständig", dass dem Signal eindeutig ein Zustand zugeordnet werden kann.

Alternativ oder zusätzlich kann das Signal durch eine Veränderung der Emission des Emitters oder der Emitter (z.B. durch Blinken) emittiert werden und/oder definiert sein. Vorzugsweise handelt es sich dabei um eine Veränderung der Emission innerhalb eines Zeitintervalls, insbesondere innerhalb des beschriebenen Zeitintervalls zur vollständigen Emission. Die Veränderung der Emission kann beispielsweise die Veränderung (z.B. 1, 2, 3 oder mehr Male) der Konstellation der Emission mehrerer Emitter umfassen.

Bei den emittierbaren Signalen handelt es sich bevorzugt um Signale, zu deren Emission die Zustandsanzeige ausgebildet und/oder programmiert ist.

Es kann vorgesehen sein, dass dem Zustand eines oder mehrere unterschiedliche Signale zugeordnet sind.

Es besteht die Möglichkeit, die Zustandsanzeige so auszubilden, dass sie den Zustand durch ein, zwei oder mehr unterschiedliche Signale (vorzugsweise gleichzeitig) anzeigt. Die vollständige Emission dieser demselben Zustand zugeordneten Signale kann unterschiedlich lange dauern und/oder die Signale können durch unterschiedliche Emitter oder eine unterschiedliche Kombination von Emittern der Zustandsanzeige emittiert werden.

Dem Zustand können beispielsweise ein durch den Menschen nicht erfassbares Signal und ein durch den Menschen erfassbares Signal zugeordnet sein und die Zustandsanzeige kann beide Signale (vorzugsweise gleichzeitig) emittieren. Optional kann zwischen den beiden Anzeigearten (durch den Menschen erfassbares / nicht erfassbares Signal) umgeschaltet werden. Im Notfall kann die Zustandsanzeige so von einem Menschen auch direkt, also ohne Zuhilfenahme eines Auswertegeräts, abgelesen werden.

Insbesondere können ein oder mehrere Emitter den Zustand (d.h. den aktuellen Gerätezustand) mittels eines durch den Menschen nicht erfassbaren Signals emittieren, während ein oder mehrere andere Emitter der Zustandsanzeige den Zustand in Form eines durch den Menschen erfassbaren Signals emittieren. Es ist jedoch auch möglich, dass dieselben oder teilweise dieselben Emitter (vorzugsweise gleichzeitig) die zwei Signale emittieren.

Ein Vorteil einer solchen Ausgestaltung kann darin bestehen, dass der Gerätezustand wahlweise mittels eines Auswertegeräts oder ohne Auswertegerät erfasst werden kann, wobei die Erfassung mittels des Auswertegeräts schneller, z.B. innerhalb einer halben Sekunde, möglich sein kann.

Der Anzeige mittels durch den Menschen erfassbarer Signale können Grenzen gesetzt sein (z.B. weil zu wenige Emitter vorhanden sind, um viele verschiedene Zustände unterscheidbar innert nützlicher Zeit anzuzeigen). Die Anzeige mittels durch den Menschen nicht erfassbarer Signale ermöglicht eine feinere Aufschlüsselung unterschiedlicher Zustände, wenn deren Anzahl gross ist.

Wenn in diesem Dokument von einem "Signal" die Rede ist, so sei jeweils ein Signal (übliche Bedeutung des Wortes) und alternativ die vom Signal transportierte Information offenbart, soweit dies im jeweiligen Kontext Sinn ergibt.

Die Zustandsanzeige ist zweckmässigerweise dazu ausgebildet, eine oder mehrere der im Zusammenhang mit der Zustandsanzeige und/oder den Emittern beschriebenen Aktionen durchzuführen.

Es ist von Vorteil, wenn die Erfassung des von der Zustandsanzeige emittierten Signals durch den Sensor berührungslos erfolgt, insbesondere dass das Auswertegerät zur Erfassung des Signals nicht mit dem Gerät oder dessen Zustandsanzeige physisch verbunden wird.

Der Sensor des tragbaren Auswertegerät ist dazu ausgebildet und/oder dazu in der Lage, das von der Zustandsanzeige emittierte Signal zu erfassen. Es handelt sich dabei vorzugsweise um einen optischen, insbesondere einen optoelektronischen Sensor. Besonders bevorzugt ist der Sensor eine Kamera.

Der Sensor ist am Auswertegerät angeordnet und vorzugsweise fest mit diesem verbunden.

Es ist von Vorteil, wenn der Sensor dazu ausgebildet und/oder dazu in der Lage ist, eine Veränderung der Emission der Zustandsanzeige und/oder der Emission der Emitter während eines Zeitintervalls zu erfassen. Dies stellt vorzugsweise einen Teil der Erfassung des von der Zustandsanzeige emittierten Signals und/oder einen Teil der Erfassung eines optional emittierten Identifikationsmerkmals (vgl. weiter unten) dar. Der Sensor ist zu diesem Zweck bevorzugt dazu in der Lage und/oder dazu ausgebildet, während des besagten Zeitintervalls eine Videosequenz und/oder sequenziell mehrere (z.B. mindestens 2, 5 oder 10) Einzelbilder zu erfassen (d.h. aufzunehmen) und vorzugsweise auch zu speichern. Das besagte Zeitintervall kann mit Vorteil dem weiter oben genannten "Zeitintervall zur vollständigen Emission des Signals" entsprechen.

Die Videosequenz oder die Einzelbilder können Informationen zur oben beschriebenen Veränderung der Emission enthalten und können nach der Erfassung als Teil des in diesem Dokument offenbarten Verfahrens ausgewertet werden. Bevorzugt können die Videosequenz oder die Einzelbilder (einzeln und/oder in Kombination miteinander) das Signal oder das Identifikationsmerkmal oder Informationen dazu enthalten.

Das Auswertegerät kann eine Eingabevorrichtung, z.B. Knöpfe oder Tasten, aufweisen, wobei dies aber nicht zwingend ist.

Zusätzlich zum Sensor weist das Auswertegerät vorzugsweise eine Anzeigevorrichtung, insbesondere einen Bildschirm oder ein Display auf, z.B. ein LCD-Display oder ein LED-Display.

Das Auswertegerät kann dazu ausgebildet sein, auf der Anzeigevorrichtung Zeichen, insbesondere Text und/oder Bilder darzustellen. So können dem Benutzer z.B. die beschriebenen Informationen zum Zustand des Geräts angezeigt werden.

Alternativ oder zusätzlich kann vorgesehen sein, dass die Anzeigevorrichtung dazu ausgebildet ist, zusätzlich als Eingabevorrichtung zu dienen. Zu diesem Zweck kann es sich bei der Anzeigevorrichtung beispielsweise um einen Touch-Screen handeln.

Einerseits die Anzeigevorrichtung und/ oder die Eingabevorrichtung und andererseits der Sensor können auf zwei verschiedenen, insbesondere auf zwei gegenüberliegenden Seiten des tragbaren Auswertegeräts angebracht sein, damit der Benutzer während der Signalerfassung die Anzeigevorrichtung betrachten und/oder die Eingabevorrichtung bedienen kann.

Das Verfahren umfasst das Anzeigen von Informationen zum Zustand, der dem erfassten Signal zugeordnet ist, mittels der Anzeigevorrichtung des tragbaren Auswertegeräts.

Alternativ oder zusätzlich dazu kann das Verfahren umfassen, dass in Abhängigkeit des Zustands, der dem erfassten Signal zugeordnet ist, eine andere Aktion ausgeführt wird. Zum Beispiel kann das Auswertegerät als eine solche Aktion Daten und/ oder einen Befehl an ein Zielgerät (beispielsweise die Zustandsanzeige und/oder das Gerät und/oder den Server) senden, wobei der Befehl vorzugsweise ein Befehl zur Ausführung einer Software durch das Zielgerät ist. Das Gerät kann auf diese Weise zum Beispiel dazu veranlasst werden, Schritte zur Behebung einer Fehlfunktion einzuleiten.

Das Verfahren sieht vor, dass ein Vergleich des mittels des Sensors erfassten Signals mit Signalen erfolgt, die in einer Datenbank gespeichert sind. Gleiches gilt für optional erfasste Identifikationsmerkmale und deren Vergleich mit gespeicherten Identifikationsmerkmalen (vgl. weiter unten).

Der Vergleich kann von einer dazu ausgebildeten und/oder zu diesem Zweck programmierten Datenverarbeitungseinheit wie beispielsweise einem Mikrochip, Mikrocontroller oder Computer ausgeführt werden.

Ein oder mehrere beliebige weitere Auswertungsschritte (z.B. die Auswertung der in diesem Dokument erwähnten Signale und/oder Identifikationsmerkmale und/oder Zustände und/oder Informationen) können ebenfalls von der Datenverarbeitungseinheit ausgeführt werden. Solche Auswertungsschritte können neben dem genannten Vergleich auch die Zuordnung von in diesem Dokument erwähnten Informationen sein (z.B. die Zuordnung von Signalen zu Zuständen).

Die Datenverarbeitungseinheit kann sich im tragbaren Auswertegerät oder in einem entfernt davon angeordneten Server befinden, oder beide können eine Datenverarbeitungseinheit aufweisen, wobei dann vorgesehen sein kann, dass ein Teil der für das Verfahren notwendigen Auswertungsschritte durch die eine Datenverarbeitungseinheit und ein anderer Teil durch die andere Datenverarbeitungseinheit durchgeführt wird. Der Einfachheit halber wird nur von einer Datenverarbeitungseinheit ("die Datenverarbeitungseinheit") gesprochen, wobei dieser Ausdruck jede der vorgenannten Varianten vorzugsweise einzeln und unabhängig offenbart.

Bevorzugt erfolgt ein Vergleich jeweils zwischen einer erfassten Information (z.B. erfasstes Signal, erfasstes Identifikationsmerkmal) und gespeicherten Informationen (z.B. gespeicherte Signale, gespeicherte Identifikationsmerkmale), vorzugsweise zum Zweck der Identifikation einer gespeicherten Information, die der erfassten Information entspricht.

Der Einfachheit halber ist jeweils nur von Informationen (Signalen, Zuständen etc.) die Rede. Es seien bei deren Erwähnung jedoch auch jeweils davon abgeleitete Informationen offenbart. Beispielsweise wird ein erfasstes Signal zweckmässigerweise durch das Auswertegerät ausgewertet und/oder gespeichert, wobei das erfasste Signal zu diesem Zweck in eine durch die Datenverarbeitungseinheit auswertbare Form und/ oder eine speicherbare Form konvertiert werden kann. Möglich ist z.B. eine Konvertierung von analog zu digital und/oder eine Konvertierung in ein bestimmtes Dateiformat.

Die für die Durchführung des Verfahrens notwendigen Informationen, welche zur Durchführung des Verfahrens miteinander in Beziehung gesetzt werden (d.h. beispielsweise einander zugeordnet oder miteinander verglichen werden), werden zweckmässigerweise in Form von Daten gespeichert. Zu diesem Zweck ist eine Datenbank vorgesehen. Zu diesen Informationen können beispielsweise die folgenden gehören: Zustände, Informationen zu Zuständen, Signale, Identifikationsmerkmale, Geräte, und/oder Gerätetypen.

Die Datenbank und/oder die in der Datenbank gespeicherten Informationen können sich auf dem tragbaren Auswertegerät oder auf einem entfernt davon angeordneten Server befinden.

Die für die Durchführung des Verfahrens notwendigen Informationen, können alle in derselben Datenbank gespeichert sein. Alternativ können verschiedene Teile der für die Durchführung des Verfahrens notwendigen Informationen in unterschiedlichen Datenbanken gespeichert sein. Unterschiedliche Datenbanken können sich auf demselben oder auf unterschiedlichen Geräten (z.B. Auswertegerät oder Server) befinden. Die genannten unterschiedlichen Geräte können am selben Ort oder entfernt voneinander lokalisiert und/oder über Kommunikationsverbindungen (z.B. über ein lokales Kommunikationsnetzwerk oder über das Internet) miteinander in Kontakt stehen. Der Einfachheit halber wird deshalb nur von einer Datenbank ("die Datenbank") gesprochen, wobei dieser Ausdruck jede der vorgenannten Varianten vorzugsweise einzeln und unabhängig offenbart.

Die Datenbank und/ oder die in der Datenbank gespeicherten Informationen (in Form von Daten) sind zweckmässigerweise auf einem oder mehreren Datenträgern gespeichert.

Einem gespeicherten Signal ist in der Datenbank ein Zustand des Geräts zugeordnet. Vorzugsweise sind dem Zustand Informationen zugeordnet. Diese werden als "Informationen zum Zustand" bezeichnet, um sie von den weiter oben beschriebenen "Informationen" zu unterscheiden (zu den "Informationen" können auch die "Informationen zum Zustand" gehören).

Optional kann einem gespeicherten Signal und/oder einem gespeicherten Zustand in der Datenbank zusätzlich ein Gerät oder Gerätetyp zugeordnet sein.

Darüber hinaus ist vorgesehen, dass die Informationen zu demjenigen Zustand, der in der Datenbank dem erfassten Signal zugeordnet ist, mittels der Anzeigevorrichtung des tragbaren Auswertegeräts angezeigt wird.

Information zum Zustand können z.B. umfassen: Identifikation des Zustands (z.B. "Fehlfunktion", "Fehlercode") und/oder Beschreibung des Zustands (z.B. "ein Kontakt des Relais ist gebrochen") und/oder zustandsbezogene Anweisungen an den Benutzer (z.B. eine Anweisungen zur Änderung des Zustands, beispielsweise zur Fehlerbehebung, oder eine Anweisung, eine Person oder Firma zu kontaktieren). Solche Anweisungen könnten dem Benutzer beispielsweise durch die Ausführung eines Programms (z.B. in Form eines Hilfe-Assistenten-Programms) zur Verfügung gestellt werden, welches dem Benutzer den (oder die) nächsten auszuführenden Schritt (oder Schritte) zur Änderung des Zustands (z.B. zur Behebung einer Fehlfunktion des Geräts) anzeigt.

Die Informationen zum Zustand können in visueller (z.B. Zeichen oder Bilder) und/oder akustischer Form (z.B. Tonfolge oder Sprachausgabe) durch die Anzeigevorrichtung angezeigt oder wiedergegeben werden. Bevorzugt ist, dass die Informationen zum Zustand von der Anzeigevorrichtung in Form von Zeichen (z.B. Buchstaben oder Zahlen) und/oder Bildern angezeigt werden.

Es ist von Vorteil, wenn mehrere Zustände in der Datenbank gespeichert sind und diesen Zuständen jeweils Informationen (Informationen zum Zustand) zugeordnet sind.

Wenn in diesem Dokument davon die Rede ist, dass einer Information eine andere Information zugeordnet ist, dann sind mit diesen Informationen vorzugsweise jeweils die in der Datenbank gespeicherten Varianten dieser Informationen gemeint.

Die erfasste Information (z.B. erfasstes Signal, erfasstes Identifikationsmerkmal) kann, wie oben beschrieben (vorzugsweise temporär, z.B. für die Dauer des Verfahrensschritts, für den sie benötigt wird) gespeichert und optional später (z.B. nach der Durchführung des Verfahrens) wieder gelöscht werden. Sie wird dennoch als "erfasste Information" bezeichnet, um sie von der Information gleicher Art, die in der Datenbank gespeichert ist, also von der "gespeicherten Information" (z.B. gespeichertes Signal, gespeichertes Identifikationsmerkmal) zu unterscheiden.

Durch die Unterscheidung zwischen "erfasster Information" und "gespeicherter Information" wird die Beschreibung von Sachverhalten jedoch z.T. stark erschwert. Deshalb kann der Einfachheit halber davon die Rede sein, dass einer erfassten Information (z.B. erfasstes Signal, erfasstes Identifikationsmerkmal etc.) eine andere Information (z.B. Zustand, Informationen zum Zustand, Gerät, Gerätetyp etc.) zugeordnet ist. Dann sei aber dennoch gemeint, dass die gespeicherten Varianten dieser Informationen (z.B. gespeichertes Signal, gespeichertes Identifikationsmerkmal, gespeicherter Zustand, gespeicherter Gerätetyp etc.) einander zugeordnet sind. Bei solchen Ausführungen sei also (falls ein Vergleich zwischen einer erfassten Information und gespeicherten Informationen gleicher Art stattfindet) jeweils implizit offenbart, dass die erfasste Information mit gespeicherten Informationen derselben Art verglichen wird (z.B. erfasstes Signal wird mit gespeicherten Signalen verglichen) und die der erfassten Information (z.B. erfasstes Signal) entsprechende gespeicherte Information (z.B. ein bestimmtes gespeichertes Signal) Gegenstand der beschriebenen Zuordnung ist. Es gibt jedoch auch erfasste Informationen, die nicht mit gespeicherten Informationen gleicher Art verglichen werden müssen (z.B. Datum, Uhrzeit, Ort). Wenn in diesem Zusammenhang von einer Zuordnung die Rede ist, so sei implizit offenbart, dass eine solche erfasste Information gespeichert wird und die resultierende gespeicherte Information Gegenstand der beschriebenen Zuordnung ist.

Vorzugsweise erfolgt oder existiert eine Zuordnung jeweils zwischen gespeicherten Informationen und/oder zwischen Informationen unterschiedlicher Art.

Zu den erfassten Informationen können auch eine oder mehrere der folgenden gehören: Datum; Uhrzeit; Ort; Sensorinformationen; Netzwerkinformationen.

Zu den erfassten Informationen können neben dem erfassen Signal also auch andere Informationen (insbesondere zeitpunktabhängige Informationen) gehören. Während das erfasste Signal vom Sensor erfasst wird, können diese anderen erfassten Informationen auch durch andere Mittel erfasst werden, z.B. durch ein Positionsbestimmungsinstrument (z.B. Satellitennavigations-Empfänger wie GPS und/oder GLONASS-Empfänger) und/ oder durch ein Zeitmessinstrument. Diese Mittel können Teile des Auswertegeräts sein.

Eine erfasste Information kann temporär oder ohne Zeitbegrenzung gespeichert werden. Wird sie ohne Zeitbegrenzung gespeichert, so sei bei entsprechenden Ausführungen implizit offenbart, entweder dass die erfasste Information gespeichert und so in eine gespeicherte Information umgewandelt wird oder dass die erfasste Information mit einer gespeicherten Information gleicher Art verglichen wird und die der erfassten Information entsprechende gespeicherte Information verwendet wird (falls ein solcher Vergleich vorgesehen ist, wie beispielsweise bei Signalen oder Identifikationsmerkmalen). Dadurch ist es ermöglicht, dass eine Zuordnung der erfassten Information zu anderen Informationen (einer anderen Art) ermöglicht ist, wobei es sich bei diesen anderen Informationen um gespeicherte Informationen handelt, die optional zuvor selbst erfasst wurden.

Sinnvollerweise wird eine erfasste Information mit weiteren Informationen, insbesondere erfassten Informationen, verknüpft (d.h. die Informationen werden einander zugeordnet) und in verknüpfter Form gespeichert.

Möglich ist beispielsweise eine Verknüpfung einer Information, insbesondere des erfassten Signals, mit einem Datum, einer Uhrzeit, einem Ort und/oder einem Gerät etc.

Informationen können als Teil des Verfahrens anderen Informationen (insbesondere Informationen anderer Art) zugeordnet werden. Beispielsweise können auf diese Weise Ereignisse festgehalten werden, indem eine Zeitinformation (z.B. ein Datum und/oder eine Uhrzeit) erfasst, gespeichert und einem Zustand zugeordnet wird. Auf diese Weise ist es möglich, festzustellen, wann eine Veränderung des Zustands, z.B. ein Fehler, aufgetreten ist.

Bei Erwähnung des Begriffs "Informationen" können allgemein Informationen, bevorzugt aber die in diesem Dokument genannten Arten von Informationen gemeint sein. Ist nicht erwähnt, dass es sich bei einer Information (z.B. erfasstes Signal oder erfasstes Identifikationsmerkmal) um eine in der Datenbank gespeicherte Information handelt, so sei die Information in der beschriebenen Form (z.B. erfasstes Signal oder erfasstes Identifikationsmerkmal) und alternativ als in der Datenbank gespeicherte Variante dieser Information (z.B. gespeichertes Signal, gespeichertes Identifikationsmerkmal) offenbart. Dadurch soll die wiederholte Erklärung vermieden werden, dass eine Information mit gespeicherten Informationen der gleichen Art verglichen wird und dann die mittels des Vergleichs identifizierte gespeicherte Information verwendet wird.

Zu den Informationen können zum Beispiel eine oder mehrere der folgenden gehören: Datum; Uhrzeit; Sensorinformationen; Netzwerkinformationen; Namen; Prioritäten etc. Solche Informationen können der Nachverfolgbarkeit oder Reproduzierung des Zustandes (z.B. eines fehlerhaften Zustandes des Geräts), dienen oder die Beherrschung und/ oder Veränderung (insbesondere Behebung) des Zustandes ermöglichen. Sie können jedoch auch zur Eingrenzung des Fehlereinflusses nützlich sein etc.

Wie beschrieben, können Informationen einander zugeordnet sein, wobei sie einander als Teil des Verfahrens zugeordnet werden können oder alternativ bereits in der Datenbank in zugeordneter Form vorliegen können. Beispielsweise können Prioritäten, die anderen Informationen (z.B. Zuständen) zugeordnet sind, die Reihenfolge der Auswertung dieser Informationen definieren.

Es kann vorgesehen sein, dass eine oder mehrere der Informationen, (insbesondere das erfasste Signal oder diesem zugeordnete Informationen wie z.B. der Zustand des Geräts) mittels einer Kommunikationseinrichtung des tragbaren Auswertegeräts vom Auswertegerät an einen Server und/ oder umgekehrt übermittelt werden. Dies ist besonders zweckmässig wenn, wie oben beschrieben, bestimmte, für die Durchführung des Verfahrens oder einzelner Verfahrensschritte notwendige Informationen nicht auf dem tragbaren Auswertegerät sondern auf dem genannten Server vorhanden sind und/oder wenn ein Teil der Verfahrensschritte vom Server ausgeführt wird.

Optional kann der Server die empfangenen Informationen auswerten und/oder speichern. Beispielsweise kann als Teil einer Auswertung ein Vergleich der empfangenen Informationen mit und/oder eine Zuordnung der empfangenen Information zu einer oder mehreren weiteren auf dem Server gespeicherten Informationen erfolgen. Das Ergebnis der Auswertung kann anschließend in Form von Informationen vom Server an das Auswertegerät übermittelt werden. Möglich wäre es beispielsweise, dass ein Service- Unternehmen oder ein GeräteHersteller einen Server mit einer Datenbank betreibt, auf dem die empfangenen Informationen gespeichert und ausgewertet werden, wobei anschliessend Informationen (z.B. Anweisungen an den Nutzer) an das Auswertegerät übermittelt und dort angezeigt werden oder ein Service-Techniker vorbeigeschickt wird.

Es kann von Vorteil sein, wenn das Gerät und/oder die Zustandsanzeige, ein Identifikationsmerkmal aufweist oder ein solches emittiert. Das Identifikationsmerkmal ist dazu ausgebildet, das Gerät (individuell) oder den Gerätetyp zu identifizieren. Vorzugsweise erlaubt es das Identifikationsmerkmal, ein Gerät von einem anderen Gerät zu unterscheiden, wobei das andere Gerät in Bezug auf seine Konstruktion identisch oder unterschiedlich sein kann.

Das Identifikationsmerkmal kann in der Form eines Identifikations-Signals z.B. durch die Zustandsanzeige emittiert werden, vorzugsweise mittels derselben oder mittels derselben Art von Emittern, die auch für die Emission des Signals verwendet werden. Der Begriff "Identifikations-Signal" wird an dieser Stelle zur Unterscheidung vom Begriff "Signal" verwendet, das zur Anzeige des Geräte-Zustands eingesetzt wird. Im Folgenden wird darauf jedoch als "Identifikationsmerkmal" Bezug genommen.

Es ist auch möglich, dass das Identifikationsmerkmal am oder im Gerät lokalisiert ist. Mit Vorteil kann es auf der Oberfläche des Geräts, z.B. auf dem Gerätegehäuse, angebracht sein. Vorzugsweise liegt das Identifikationsmerkmal in Form einer Zeichenfolge (z.B. beinhaltend Buchstaben und/oder Zahlen) oder in Form eines Codes (z.B. Strichcode oder Data Matrix, d.h. "zweidimensionaler Strichcode") vor. Das Identifikationsmerkmal kann optional auf die Oberfläche des Geräts, insbesondere auf das Gerätegehäuse, aufgebracht sein (z.B. als Plakette, Etikette, Prägung und/oder Farbe, einschliesslich Schwarz und Weiss).

Eine weitere Möglichkeit besteht darin, dass die äussere Form des Geräts oder die äussere Form von Teilen des Geräts selbst das Identifikationsmerkmal darstellen.

Die beschriebenen Möglichkeiten können jedoch auch kombiniert werden, d.h. ein Teil des Identifikationsmerkmals kann in einer der beschriebenen Formen präsent sein, während ein weiterer Teil in einer anderen der beschriebenen Formen präsent ist. Die unterschiedlichen Teile des Identifikationsmerkmals können dann z.B. unterschiedliche Informationen zum Gerät umfassen (z.B. Hersteller, Typ, Seriennummer, Land etc.).

Es ist besonders bevorzugt, wenn das Identifikationsmerkmal in derselben Position des tragbaren Auswertegeräts (Position des Auswertegeräts relativ zum Gerät und/ oder relativ zur Zustandsanzeige) erfassbar ist, wie das von der Zustandsanzeige emittierte Signal. Alternativ oder zusätzlich ist es bevorzugt, wenn das Signal und das Identifikationsmerkmal gleichzeitig durch das Auswertegerät erfassbar sind und/oder erfasst werden. Auf diese Weise ist es ermöglicht, dass die beiden Informationen erfasst werden, ohne dass das Auswertegerät zwischen der Erfassung des Signals und der Erfassung des Identifikationsmerkmals relativ zum Gerät bewegt wird.

Bei Vorhandensein eines Identifikationsmerkmals kann das Verfahren zusätzlich die folgenden Schritte umfassen:
Das Identifikationsmerkmal kann mittels eines Sensors des tragbaren Auswertegeräts erfasst werden, vorzugsweise mittels desselben Sensors, der auch zur Erfassung des Signals eingesetzt wird.

Das erfasste Identifikationsmerkmal kann dann mit Identifikationsmerkmalen verglichen werden, die in der Datenbank gespeichert sind. Durch den Vergleich wird ein gespeichertes Identifikationsmerkmal identifiziert, das dem erfassten Identifikationsmerkmal entspricht.

Den gespeicherten Identifikationsmerkmalen in der Datenbank ist zweckmässigerweise jeweils ein Gerät oder ein Gerätetyp zugeordnet. In diesem Zusammenhang handelt es sich bei "Gerät" und "Gerätetyp" um Informationen zum Gerät (z.B. eine Seriennummer, Gerätetyp-Bezeichnung etc.).

Alternativ oder zusätzlich dazu kann auch vorgesehen sein, dass verschiedene Geräte und/oder Gerätetypen (d.h. Informationen dazu) in der Datenbank gespeichert sind und manuell vom Benutzer ausgewählt werden können, beispielsweise über eine GUI ("graphical user interface"), welche auf der Anzeigevorrichtung angezeigt wird. Es ist bevorzugt, wenn der Benutzer in diesem Fall das Gerät, z.B. durch Inaugenscheinnahme, selbst identifiziert und dann auswählt.

Es besteht auch die Möglichkeit einer Kombination dieser Varianten. Zum Beispiel kann das Identifikationsmerkmal eine Vorselektion ermöglichen und der Benutzer wählt dann aus einer so reduzierten Anzahl von Möglichkeiten ein Gerät oder einen Gerätetyp manuell aus.

Den gespeicherten Identifikationsmerkmalen und/oder Geräten und/oder Gerätetypen sind vorzugsweise jeweils ein oder mehrere der gespeicherten Signale zugeordnet. Zweckmässigerweise ist jedem Gerätetyp ein Set unterschiedlicher Signale zugeordnet.

Andererseits kann ein gespeichertes Signal einem oder mehreren der gespeicherten Identifikationsmerkmale und/oder der Geräte und/oder der Gerätetypen zugeordnet sein. Dasselbe Signal kann z.B. für unterschiedliche Gerätetypen verwendet werden.

Wenn ein gespeichertes Signal mehreren Identifikationsmerkmalen und/oder Geräten und/oder Gerätetypen zugeordnet ist, kann die Zuordnung des erfassten Signals zu einem Gerät oder Gerätetyp und/oder der Vergleich des erfassten Signals mit den gespeicherten Signalen und/oder die Auswertung dieses Vergleichsergebnisses in Abhängigkeit des erfassten Identifikationsmerkmals und/oder in Abhängigkeit des manuell ausgewählten Geräts oder Gerätetyp erfolgen.

Es seien zudem die in diesem Dokument beschriebenen Vorrichtung oder Vorrichtungsteile (z.B. tragbares Auswertegerät, Server, Gerät, Zustandsanzeige, System zur Signalauswertung etc.) mit einem oder mehreren der in diesem Dokument beschriebenen Merkmale und/ oder zur Durchführung des in diesem Dokument beschriebenen Verfahrens offenbart. Beim Auswertegerät kann es sich um ein Handgerät handeln.

Aktionen, die in der Form von Eignungen, Fähigkeiten, Eigenschaften oder Funktionen der in diesem Dokument beschriebenen Vorrichtungen oder Vorrichtungsteile offenbart sind, seien auch (unabhängig und in beliebiger Kombination) als Verfahrensschritte des Verfahrens offenbart und zwar abhängig und unabhängig von der entsprechenden Vorrichtung oder dem entsprechenden Vorrichtungsteil. Als Vorrichtungsteile können in diesem Zusammenhang auch die in Form von Daten gespeicherten Informationen angesehen werden. Beispielsweise offenbart der Hinweis, dass eine Information anzeigbar ist, auch einen Verfahrensschritt, der die Anzeige der Information vorsieht. Es seien zudem die Verwendungen von Merkmalen der beschriebenen Vorrichtungen oder Vorrichtungsteile (oder die durch diese Merkmale ermöglichten Aktionen) als Verfahrensschritte des Verfahrens offenbart. Umgekehrt können die offenbarten Vorrichtungen oder Vorrichtungsteile Mittel aufweisen, die einen oder mehrere der im Zusammenhang mit dem offenbarten Verfahren genannten Verfahrensschritte durchführen können und/oder dazu ausgebildet sind. Beispielsweise offenbart der Hinweis, dass eine Information angezeigt wird, auch ein Mittel zur Anzeige der Information.

Begriffe in diesem Dokument sollen bevorzugt so verstanden werden, wie sie ein Fachmann auf dem Gebiet verstehen würde. Sind im jeweiligen Kontext mehrere Interpretationen möglich, so sei vorzugsweise jede Interpretation individuell offenbart. Insbesondere für den Fall, dass Unklarheiten bestehen sollten, können alternativ oder ergänzend die in diesem Dokument aufgeführten bevorzugten Definitionen herangezogen werden.

In diesem Dokument soll sowohl bei Verwendung des bestimmten Artikels (z.B. "das") als auch bei Verwendung des unbestimmten Artikels (z.B. "ein") in Verbindung mit einem Objekt, soweit nichts anderes angegeben ist, das Objekt ohne Festlegung, ob es sich um dasselbe Objekt gleicher Bezeichnung handelt, welches andernorts erwähnt ist, offenbart sein. Unabhängig davon soll offenbart sein, dass es sich bei jeder Erwähnung eines Objekts gleicher Bezeichnung um dasselbe Objekt handelt. Dies trifft für alle in der Einzahl (Singular) erwähnten Objekte zu.

Ist in diesem Dokument ein Objekt erwähnt, so schliesst dies nicht das Vorhandensein zusätzlicher Objekte derselben Art aus. Anders ausgedrückt seien bei Erwähnung eines Objekts jeweils "mindestens ein" solches Objekt und "ein oder mehrere" solche Objekte offenbart. Eine, zwei, drei oder mehr oder sogar alle der zusätzlichen Objekte können optional dieselben Merkmale wie das eine Objekt aufweisen.

Offenbart seien also unter anderem:
(A) Ein Verfahren zur Auswertung von Signalen einer Zustandsanzeige eines Geräts, wobei es sich beim Gerät vorzugsweise um eine Sicherheitseinrichtung handelt, mit den Schritten
   - Erfassung eines von der Zustandsanzeige emittierten Signals mittels eines Sensors eines tragbaren Auswertegeräts, wobei es sich beim Sensor vorzugsweise um einen optischen Sensor und besonders bevorzugt um eine Kamera handelt,
   - Vergleich des erfassten Signals mit in einer Datenbank gespeicherten Signalen, wobei den gespeicherten Signalen in der Datenbank jeweils ein Zustand zugeordnet ist, und Identifikation eines gespeicherten Signals (aus der Menge der vorgenannten gespeicherten Signale), das dem erfassten Signal entspricht, und
   - Anzeige von Informationen zum Zustand, der dem identifizierten gespeicherten Signal zugeordnet ist, mittels einer Anzeigevorrichtung des tragbaren Auswertegeräts. Die Informationen zum Zustand beschreiben vorzugsweise den Zustand des Geräts. Alternativ oder zusätzlich enthalten die Informationen zum Zustand Hinweise (insbesondere Anweisungen) zur Änderung des Zustands, welche vorzugsweise an den Benutzer des Auswertegeräts und/ oder des Geräts gerichtet sind.
(B) Ein Verfahren nach Punkt (A), wobei das emittierte Signal in der Form wie es von der Zustandsanzeige emittiert wird, durch das menschliche Auge nicht oder nicht eindeutig von anderen von der Zustandsanzeige emittierbaren Signalen unterscheidbar und/oder nicht wahrnehmbar ist. Bei den emittierbaren Signalen handelt es sich um Signale, zu deren Emission die Zustandsanzeige ausgebildet und/oder programmiert ist.
(C) Ein Verfahren nach einem der Punkte (A) oder (B), wobei das erfasste Signal oder davon abgeleitete Informationen (insbesondere Informationen zum erfassten Signal oder Informationen zum Zustand, der dem erfassten Signal zugeordnet ist) vom Auswertegerät an einen Server übermittelt werden. Die Übermittlung erfolgt vorzugsweise mittels einer Kommunikationseinrichtung des tragbaren Auswertegeräts. Es ist bevorzugt, wenn anschliessend von den vorgenannten übermittelten Signalen oder Informationen abgeleitete Informationen vom Server zurück an das Auswertegerät übermittelt werden.
(D) Ein Verfahren nach einem der Punkte (A) bis (C), wobei das Gerät ein Identifikationsmerkmal aufweist, und das Verfahren zusätzlich die folgenden Schritte umfasst:
   - Erfassung des Identifikationsmerkmals, vorzugsweise mittels des vorgenannten Sensors des tragbaren Auswertegeräts,
   - Anzeige der Informationen zum Zustand in Abhängigkeit des erfassten Identifikationsmerkmals, wobei es sich beim Zustand um den vorgenannten, dem identifizierten gespeicherten Signal zugeordneten Zustand handelt und die Anzeige mittels der Anzeigevorrichtung des tragbaren Auswertegeräts erfolgt. Alternativ kann auch allgemein eine Anzeige der Informationen zum Zustand in Abhängigkeit des erfassten Signals und in Abhängigkeit des erfassten Identifikationsmerkmals erfolgen.
(E) Ein Verfahren nach einem der Punkte (A) bis (D), wobei das Identifikationsmerkmal in derselben Position des tragbaren Auswertegeräts relativ zum Gerät (mittels des Auswertegeräts) erfassbar ist und vorzugsweise erfasst wird, wie das von der Zustandsanzeige emittierte Signal.
(F) Ein Verfahren nach einem der Punkte (A) bis (E), wobei das Verfahren zusätzlich die folgenden Schritte umfasst:
   - Vergleich des erfassten Identifikationsmerkmals mit in der Datenbank gespeicherten Identifikationsmerkmalen, wobei den gespeicherten Identifikationsmerkmalen in der Datenbank jeweils ein Gerät oder ein Gerätetyp zugeordnet ist und/oder den gespeicherten Identifikationsmerkmalen in der Datenbank jeweils ein oder mehrere der in der Datenbank gespeicherten Signale zugeordnet sind, und
   - Identifikation eines gespeicherten Identifikationsmerkmals (aus der Menge der vorgenannten gespeicherten Identifikationsmerkmale), das dem erfassten Identifikationsmerkmal entspricht,
   - vorzugsweise Vergleich des erfassten Signals mit den in der Datenbank gespeicherten Signalen, welche dem identifizierten gespeicherten Identifikationsmerkmal zugeordnet sind, und Identifikation eines gespeicherten Signals (aus der Menge der vorgenannten gespeicherten Signale, die dem identifizierten gespeicherten Identifikationsmerkmal zugeordnet sind), das dem erfassten Signal entspricht,
   - Anzeige von Informationen zum Zustand, der dem vorgenannten identifizierten gespeicherten Signal zugeordnet ist, mittels der Anzeigevorrichtung des tragbaren Auswertegeräts.
(G) Ein Verfahren nach einem der Punkte (A) bis (F), wobei die Zustandsanzeige Emitter aufweist, wobei das Signal und/oder das Identifikationsmerkmal durch die eine oder mehreren Farben (oder allgemeiner: Wellenlängen) der Emitter und/oder durch die Blinkfrequenz der Emitter und/oder durch die Blinksequenz der Emitter und/ oder durch die Auswahl der während eines bestimmten Zeitpunkts aktiven (d.h. emittierenden) Emitter charakterisiert ist.
(H) Ein tragbares und/oder handgehaltenes Auswertegerät zur Durchführung des Verfahrens nach einem der Punkte (A) bis (G).
(I) Ein System zur Durchführung des Verfahrens nach einem der Punkte (A) bis (G), beinhaltend ein Gerät mit einer Zustandsanzeige sowie ein tragbares Auswertegerät vorzugsweise nach einem der Punkte (A) bis (E) und optional einen Server.
(J) Ein Gerät mit einer LED-Zustandsanzeige (vorzugsweise zur Durchführung des Verfahrens nach einem der Punkte (A) bis (G)), wobei die LED-Zustandsanzeige dazu ausgebildet ist, Signale (vorzugsweise in Form von sichtbarem Licht) zu emittieren, welche durch das menschliche Auge nicht oder nicht eindeutig voneinander unterscheidbar sind, wobei unterschiedliche Signale durch unterschiedliche Zustände des Geräts bedingt sind.
(K) Verfahren nach einem der Punkte (A) bis (G), wobei zusätzlich zur Anzeige von Informationen zum Zustand in Abhängigkeit des identifizierten gespeicherten Signals weitere Aktionen ausgeführt werden, wobei vorzugsweise:
   - das erfasste Signal oder davon abgeleitete Informationen vom Auswertegerät an einen Server übermittelt werden und/oder
   - in einem Netzwerk von Geräten, zu denen auch das Gerät mit der Zustandsanzeige gehört, und die dazu ausgebildet sind, zusammenzuarbeiten, die Art dieser Zusammenarbeit modifiziert wird und/oder
   - eine Kommunikationsverbindung zu einer weiteren Person, die an einem anderen Ort als der Benutzer des Auswertegeräts lokalisiert ist, aufgebaut wird.

Allgemein sei die Ausführungen von Reaktionen auf verschiedene Zustände offenbart, insbesondere in Abhängigkeit des Zustands, der dem identifizierten gespeicherten Signal zugeordnet ist. Mögliche Reaktionen können z.B. eine oder mehrere der Folgenden umfassen: Versand einer Nachricht an Dritte, Alarmierung von bestimmten Institutionen oder Personen, Anzeige von Anweisungen zum weiteren Vorgehen oder Einleitung oder Ermittlung von Massnahmen in einem Netzwerk von Geräten (z.B. Sensoren), zu denen auch das Gerät mit der Zustandsanzeige gehört. Solche Massmahmen können beispielsweise vorteilhaft sein in einem Netzwerk von Sensoren die aus Kostengründen nacheinander geschaltet sind, oder Sensoren die zusammenhängend funktionieren müssen, oder allenfalls in virtuellen "Teilsystemen" die zur Abstraktion des Netzwerks dienen.

Zudem seien die nachfolgenden Patentansprüche zusätzlich jeweils mit einem Rückbezug auf jeden beliebigen der vorhergehenden Patentansprüche ("nach einem der vorhergehenden Ansprüche") offenbart, auch wenn sie nicht in dieser Form beansprucht sind.

### Kurze Beschreibung der Zeichnungen

Es zeigt in schematischer, nicht massstabsgetreuer Darstellung:

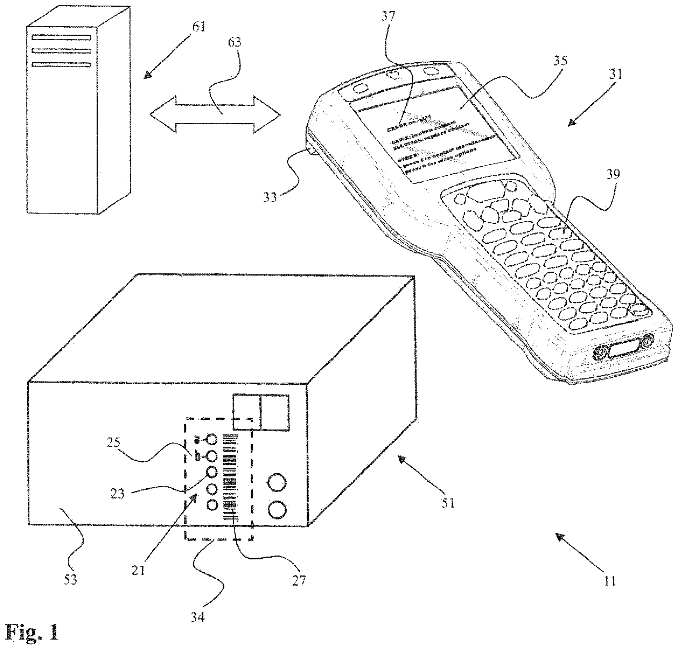

- Fig. 1: ein Signalauswertungssystem

### Ausführung der Erfindung

Die Erfindung wird nachfolgend anhand der Fig.1 beispielhaft erläutert.

Gezeigt ist ein System 11 zur Auswertung von Signalen einer LED-Zustandsanzeige 21. Das System 11 umfasst ein beliebiges Gerät 51 mit einer LED-Zustandsanzeige 21 sowie ein tragbares und/oder während seiner Verwendung handgehaltenes Auswertegerät 31 sowie optional einen Server 61.

Das Gerät 51, z.B. ein Sicherheitsschalter, kann sich in unterschiedlichen (Betriebs-) Zuständen befinden, beispielsweise einem normalen Betriebszustand, einem inaktiven Zustand oder einem gestörten bzw. fehlerhaften Zustand. Der aktuelle Zustand bzw. der Status des Geräts 51 wird über die LED-Zustandsanzeige 21 angezeigt. Diese weist eine Mehrzahl von LEDs ("light-emitting diodes") 23 auf, die elektromagnetische Strahlung gleicher oder unterschiedlicher Wellenlänge emittieren können. Im Folgenden ist auch von einem Signal die Rede, wobei das Signal durch die Emission der LEDs charakterisiert ist.

Im vorliegenden Beispiel emittieren die LEDs 23 der Zustandsanzeige 21 im für das menschliche Auge sichtbaren Wellenlängen-Bereich und zeigen (unabhängig von diesem Umstand) durch ihre Farbe (oder allgemeiner Wellenlänge) und/ oder ihre Blinkfrequenz und/oder ihre Blinksequenz und/oder die Auswahl der während eines bestimmten Zeitpunkts aktiven, d.h. emittierenden LEDs 23 in der Zustandsanzeige 21 den Zustand des Geräts 51 an. Die Verwendung sichtbaren Lichts ermöglicht es, dass der Zustand direkt mit dem menschlichen Auge erfasst und identifiziert werden kann, wie dies für LED-Zustandsanzeigen üblich ist.

Das in diesem Dokument einschliesslich der Figurenbeschreibung Gesagte ist jedoch auch auf andere Emitter als LEDs anwendbar.

Eine Blinksequenz kann z.B. durch unterschiedlich lange Zeitintervalle der Emission und/oder unterschiedlich lange Zeitintervalle zwischen aufeinanderfolgenden Emissionen eines oder mehrerer Emitter charakterisiert sein. Alternativ oder zusätzlich kann eine Blinksequenz durch eine bestimmte Reihenfolge der Emission unterschiedlicher Emitter der Zustandsanzeige charakterisiert sein.

Um die Interpretation des Signals und damit die Identifikation des Zustands des Geräts 51 zu erleichtern, können die einzelnen LEDs 23 mit einer Beschriftung 25 versehen sein.

Es ist jedoch auch möglich, dass das bzw. ein Signal von der LED-Zustandsanzeige 21 durch das menschliche Auge nicht in der Weise wahrnehmbar ist, dass dem bzw. einem Signal eindeutig ein Zustand zugeordnet werden kann. Beispielsweise könnte ein durch die Blinkfrequenz und/oder Blinksequenz der LEDs 23 charakterisiertes Signal so schnell emittiert werden, dass der vorgenannte Effekt eintritt. Mit dem Auswertegerät 31 können solche Signale erfasst und ausgewertet werden.

Normalerweise ist es vorteilhaft, wenn die Zustandsanzeige 21 das Signal in einer Form (erste Form) emittiert, die es erlaubt, dass der Zustand direkt mit dem menschlichen Auge erfasst und identifiziert werden kann (weiter oben allgemeiner als "durch den Menschen erfassbares Signal" bezeichnet). Das Auswertegerät 31 kann dann die Zuordnung des Signals zu einem Zustand erleichtern.

Es kann jedoch auch vorgesehen sein, dass das Signal in einer Form (zweite Form) emittiert wird, die durch das menschliche Auge nicht in der Weise wahrnehmbar ist, dass dem Signal eindeutig ein Zustand zugeordnet werden kann (weiter oben allgemeiner als "durch den Menschen nicht erfassbares Signal" bezeichnet).

Beispielsweise kann ein Teil der LEDs 23 den Zustand als Signal in der ersten Form und ein anderer Teil der LEDs den Zustand in der zweiten Form emittieren. Es ist jedoch auch möglich, dass die LEDs 23 oder ein Teil davon den Zustand als Signal sowohl in der ersten als auch in der zweiten Form emittieren bzw. dazu ausgebildet sind. Zum Beispiel kann eine vom menschlichen Auge lediglich als gleichmässig leuchtend wahrgenommene LED (z.B. zusammen mit der Emission weiterer LEDs als Teil eines in der ersten Form emittierten Signals) tatsächlich in einer schnellen, nicht wahrnehmbaren Sequenz blinken, wobei dies ein Signal in der zweiten Form darstellen kann.

Ist vorgesehen, dass die Zustandsanzeige 21 das Signal ausschliesslich in der zweiten Form emittiert, kann die Anzahl LEDs stark reduziert werden, im Extremfall auf lediglich eine LED 23. Auch ist es möglich, dass die für die Erfassung des Signals notwendige Zeit durch die Verwendung eines Auswertegeräts 31 reduziert wird.

Das Auswertegerät 31 kann dazu ausgebildet sein, Signale in der ersten Form und/oder in der zweiten Form zu erfassen. Die offenbarten Arten (vgl. weiter oben), wie ein Signal emittiert werden kann (Blinksequenz, Blinkfrequenz, Zeitintervall der Emission etc.), kann für Signale in der ersten Form und/oder Signale in der zweiten Form gelten. Ausserdem sind sie nicht auf die Emission im für das menschliche Auge sichtbaren Wellenlängenbereich beschränkt (vgl. oben).

Natürlich muss das Signal in der ersten Form im sichtbaren Wellenlängenbereich emittiert werden. Das Signal in der zweiten Form kann im sichtbaren und/ oder für das menschliche Auge unsichtbaren Wellenlängenbereich emittiert werden. Beispielsweise ist der Einsatz von Infrarot-LEDs denkbar.

Bei Verwendung des Auswertegeräts 31 kann die Auswertung des Signals in Abhängigkeit einer Markierung, insbesondere einer Beschriftung 25, der LEDs erfolgen, welche vom Sensor 33 erfasst wird. Die Beschriftung 25 kann optional auch dazu dienen, die LEDs 23, die zur Emission eines Signals in der ersten Form vorgesehen sind, von denjenigen zu unterscheiden, die für die Emission eines Signals in der zweiten Form vorgesehen sind. Entsprechend kann das Auswertegerät 31 dazu ausgebildet sein, die Beschriftung (oder allgemeiner eine Markierung) auf dem Gerät oder der Zustandsanzeige zu erfassen und die Erfassung und/oder die Auswertung des Signals oder der Signale in Abhängigkeit der Beschriftung (oder Markierung) vorzunehmen.

Eine besondere Anwendungsform besteht darin, dass die von der Zustandsanzeige 21 emittierten Signale charakteristisch für das Gerät 51 sind, also eindeutig einem Gerät 51 oder einem Gerätetyp zugeordnet werden können. Es kann jedoch auch vorgesehen sein, dass das Gerät 51 ein Identifikationsmerkmal 27 aufweist, welches Informationen zum Gerät und/ oder Gerätetyp enthält. Das Identifikationsmerkmal kann beispielsweise in der Form einer weiter oben beschriebenen Markierung angebracht sein. Zweckmässigerweise ist das Identifikationsmerkmal 27 so positioniert, dass es gleichzeitig mit der Zustandsanzeige 21 vom Sensor 33 des Auswertegeräts 31 erfasst werden kann. In Fig.1 ist dies beispielhaft so dargestellt, dass die Zustandsanzeige 21 und das Identifikationsmerkmal 27 innerhalb eines vom Sensor 33 erfassbaren Bereichs 34 angeordnet sind. Die Auswertung des erfassten Signals durch das Auswertegerät 31 kann bei Vorhandensein eines Identifikationsmerkmals 27 in Abhängigkeit vom erfassten Identifikationsmerkmal 27 erfolgen.

Eine Signalauswertung kann beispielsweise folgendermassen ablaufen: Die Zustandsanzeige 21 zeigt den Zustand des Geräts 51 an, indem sie ein dem Zustand zuordenbares Signal mittels eines oder mehrerer Emitter, beispielsweise LEDs 23, emittiert. Das Signal wird durch einen Sensor 33 eines Auswertegeräts 31 erfasst, wobei das Auswertegerät 31 zusätzlich ein optionales Identifikationsmerkmal 27 erfassen kann. Anschliessend wird das erfasste Signal mit in einer Datenbank gespeicherten Signalen verglichen, wobei sich die Datenbank auf dem Auswertegerät 31 oder auf einem Server 61 befinden kann. In letzterem Fall kann das Auswertegerät 31 das erfasste Signal oder Informationen dazu an den Server kommunizieren und/ oder Daten aus der Datenbank abrufen. Der Vergleich des erfassten Signals mit Signalen aus der Datenbank kann demnach vom Server oder vom Auswertegerät 31 vorgenommen werden. Die Signale in der Datenbank sind jeweils einem Geräte-Zustand und/oder Informationen zu einem Geräte-Zustand zugeordnet. Somit wird durch den Vergleich der Geräte-Zustand, welcher dem Signal zugeordnet ist, welches dem erfassten Signal entspricht, identifiziert. Die Informationen zum Geräte-Zustand oder ein Teil davon werden alsdann mittels einer Anzeigevorrichtung 35 des Auswertegeräts 31 angezeigt. Zu den angezeigten Informationen können beispielsweise ein oder mehrere der folgenden gehören: Die Bezeichnung des Zustands, eine Beschreibung des Zustands (z.B. Merkmale des Zustands, wie Ursachen oder mögliche Auswirkungen des Zustands etc.), Anweisungen zur Änderung des Zustands, Kontaktinformationen des Geräteherstellers etc.

Ist am Gerät ein Identifikationsmerkmal 27 vorgesehen, so kann den in der Datenbank gespeicherten Signalen, welchen in der Datenbank jeweils ein Zustand zugeordnet ist zusätzlich ein Identifikationsmerkmal zugeordnet sein. Der Vergleich des erfassten Signals mit in der Datenbank gespeicherten Signalen, kann in der Folge in Abhängigkeit des erfassten Identifikationsmerkmals erfolgen.

Durch optionale Bedienelemente 39 (oder allgemeiner eine "Eingabevorrichtung") kann auf die angezeigten Informationen Einfluss genommen werden; beispielsweise können Teile der Informationen aus- oder eingeblendet werden oder es kann eine Auswahl zwischen angezeigten Informationen (z.B. unterschiedlichen Gerätetypen) getroffen werden. Die Informationen können durch die Anzeigevorrichtung 35 mittels eines GUI ("graphical user interface") dargestellt werden. Weiterhin kann es möglich sein, durch Betätigung der Bedienelemente 39 einen Kontakt zum Hersteller des Geräts 51 oder zu einem Serviceunternehmen herzustellen.

Das Auswertegerät 31 weist - z.B. zum vorgenannten Zweck - vorteilhafterweise Kommunikationsmittel beispielsweise zur Ton- und/ oder Bildübertragung auf. Die optionalen Kommunikationsmittel können den Informations- und/oder Datenaustausch 63 mit dem Server 61 und/oder mit entfernten Personen und/oder mit dem genannten Hersteller oder Serviceunternehmen ermöglichen. Der Server 61 kann beispielsweise vom Gerätehersteller betrieben werden.

### Bezugszeichenliste:

- 11: System zur Signalauswertung
- 21: LED-Zustandsanzeige
- 23: LED
- 25: Beschriftung
- 27: Identifikationsmerkmal
- 31: Auswertegerät
- 33: Sensor
- 34: vom Sensor erfasster Bereich
- 35: Anzeigevorrichtung
- 37: Information zum Zustand des Geräts
- 39: Bedienelemente
- 51: Gerät
- 53: Gehäuse
- 61: Server
- 63: Datenaustausch zwischen Auswertegerät und Server

## Patentansprüche

1. Verfahren zur Auswertung von Signalen einer LED-Zustandsanzeige (21) eines Geräts (51), bei dem es sich um ein Sicherheitsgerät handelt, das Teil eines Sicherheitssystems ist, mit den Schritten
- Erfassung eines von der LED-Zustandsanzeige (21) emittierten Signals mittels einer Kamera (33) eines tragbaren Auswertegeräts (31),
- Vergleich des erfassten Signals mit in einer Datenbank gespeicherten Signalen, wobei den gespeicherten Signalen in der Datenbank jeweils ein Zustand zugeordnet ist, und Identifikation eines gespeicherten Signals, das dem erfassten Signal entspricht, und
- Anzeige von Informationen zum Zustand, der dem identifizierten gespeicherten Signal zugeordnet ist, mittels einer Anzeigevorrichtung (35) des tragbaren Auswertegeräts (31),
**dadurch gekennzeichnet, dass** das emittierte Signal in der Form wie es von der LED-Zustandsanzeige (21) emittiert wird, durch das menschliche Auge nicht oder nicht eindeutig von anderen von der LED-Zustandsanzeige (21) emittierbaren Signalen unterscheidbar ist.

2. Verfahren nach Anspruch 1, **dadurch gekennzeichnet, dass** das Signal von der LED-Zustandsanzeige (21) vollständig innerhalb von weniger als 3 Sekunden emittiert wird, wobei die vollständige Emission des Signals vorzugsweise länger als 0.01 Sekunden dauert.

3. Verfahren nach Anspruch 1 oder 2, **dadurch gekennzeichnet, dass** das emittierte Signal durch das menschliche Auge nicht wahrnehmbar ist, wobei das Signal vorzugsweise in der Form elektromagnetischer Strahlung im nicht sichtbaren Wellenlängenbereich, insbesondere in der Form von Infrarotstrahlung, emittiert wird.

4. Verfahren nach einem der Ansprüche 1 bis 3, **dadurch gekennzeichnet, dass** zusätzlich zur Anzeige von Informationen zum Zustand in Abhängigkeit des identifizierten gespeicherten Signals weitere Aktionen ausgeführt werden, wobei vorzugsweise:
- das erfasste Signal oder davon abgeleitete Informationen vom Auswertegerät (31) an einen Server übermittelt werden und/oder
- in einem Netzwerk von Geräten, zu denen auch das Gerät mit der LED-Zustandsanzeige gehört, und die dazu ausgebildet sind, zusammenzuarbeiten, die Art dieser Zusammenarbeit modifiziert wird und/oder
- eine Kommunikationsverbindung zu einer weiteren Person, die an einem anderen Ort als der Benutzer des Auswertegeräts (31) lokalisiert ist, aufgebaut wird.

5. Verfahren nach einem der Ansprüche 1 bis 4, **dadurch gekennzeichnet, dass** die Informationen zum Zustand, die mittels der Anzeigevorrichtung (35) des tragbaren Auswertegeräts (31) angezeigt werden, Hinweise enthalten, wie der Zustand geändert werden kann.

6. Verfahren nach einem der Ansprüche 1 bis 5, **dadurch gekennzeichnet, dass** das Gerät ein Identifikationsmerkmal (27) aufweist, und das Verfahren zusätzlich die folgenden Schritte umfasst:
- Erfassung des Identifikationsmerkmals (27),
- Anzeige der Informationen zum Zustand in Abhängigkeit des erfassten Identifikationsmerkmals (27).

7. Verfahren nach Anspruch 6, **dadurch gekennzeichnet, dass** das Identifikationsmerkmal (27) in derselben Position des tragbaren Auswertegeräts (31) relativ zum Gerät (51) mittels des Auswertegeräts (31) erfassbar ist, wie das von der LED-Zustandsanzeige (21) emittierte Signal.

8. Verfahren nach Anspruch 6 oder 7, **dadurch gekennzeichnet, dass** das Verfahren zusätzlich die folgenden Schritte umfasst:
- Vergleich des erfassten Identifikationsmerkmals (27) mit in der Datenbank gespeicherten Identifikationsmerkmalen und Identifikation eines gespeicherten Identifikationsmerkmals, das dem erfassten Identifikationsmerkmal (27) entspricht, wobei den gespeicherten Identifikationsmerkmalen in der Datenbank jeweils ein Gerät (51) oder ein Gerätetyp und jeweils ein oder mehrere der in der Datenbank gespeicherten Signale zugeordnet sind,
- Vergleich des erfassten Signals mit den in der Datenbank gespeicherten Signalen, welche dem identifizierten gespeicherten Identifikationsmerkmal zugeordnet sind, und Identifikation eines gespeicherten Signals, das dem erfassten Signal entspricht und dem identifizierten gespeicherten Identifikationsmerkmal zugeordnet ist,
- Anzeige von Informationen zum Zustand, der diesem identifizierten gespeicherten Signal zugeordnet ist, mittels der Anzeigevorrichtung (35) des tragbaren Auswertegeräts (31).

9. Gerät, bei dem es sich um ein Sicherheitsgerät handelt, das Teil eines Sicherheitssystems ist, mit einer LED-Zustandsanzeige, **dadurch gekennzeichnet, dass** die LED-Zustandsanzeige dazu ausgebildet ist, Signale zu emittieren, welche durch das menschliche Auge nicht oder nicht eindeutig voneinander unterscheidbar sind, wobei unterschiedliche Signale durch unterschiedliche Zustände des Geräts bedingt sind, wobei die LED-Zustandsanzeige vorzugsweise dazu ausgebildet ist, die Signale in Form von sichtbarem Licht zu emittieren.

10. Tragbares Auswertegerät zur Durchführung des Verfahrens nach einem der Ansprüche 1 bis 8.

11. Sicherheitssystem (11) zur Durchführung des Verfahrens nach einem der Ansprüche 1 bis 8, beinhaltend ein Gerät (51) mit einer LED-Zustandsanzeige (21) sowie ein tragbares Auswertegerät (31).

## Claims

1. Method for the evaluation of signals of a LED status display (21) of a device (51), for which the matter is of a safety device that is part of a safety system, with the steps:
- detection of a signal emitted by the LED status display (21) by means of a camera (33) of a portable evaluation device (31),
- comparison of the detected signal with signals stored in a database, whereby a status is respectively associated to the signals stored in the database and identification of a stored signal that corresponds to the detected signal and
- display of information about the status that is associated to the identified stored signal by means of a display device (35) of the portable evaluation device (31),
**characterized in that** the emitted signal is emitted in the form as emitted by the LED status display (21), cannot be distinguished or not univocally distinguished by the human eye from other signals that can be emitted by the LED status display (21).

2. Method according to claim 1, **characterized in that** the signal is fully emitted within less than 3 seconds by the LED status display (21), whereby the full emission of the signal preferably lasts longer than 0,01 second.

3. Method according to claim 1 or 2, **characterized in that** the emitted signal cannot be perceived by the human eye, whereby the signal is emitted as electromagnetic radiation in the non visible wavelength range, in particular as infrared radiation.

4. Method according to one of the claims 1 to 3, **characterized in that** further actions are performed additionally to the display of information about the status depending of the identified stored signal, whereby preferably
- the detected signal or information derived thereof are transmitted by the evaluation device (31) to a server and/or
- in a network of devices to which the device with the LED status display also belongs and that are designed to cooperate, the type of this cooperation is modified and/or
- a communication connection is established with a further person that is located at another place than the user of the evaluation device (31).

5. Method according to one of the claims 1 to 4, **characterized in that** the information about the status that is displayed by means of the display device (35) of the portable evaluation device (31) contains indications about how the status can be changed.

6. Method according to one of the claims 1 to 5, **characterized in that** the device has an identification characteristic (27) and the method additionally comprises the following steps:
- detection of the identification characteristic (27),
- display of the information about the status depending on the detected identification characteristic (27).

7. Method according to claim 6, **characterized in that** the identification characteristic (27) can be detected by means of the evaluation device (31) in the same position of the portable evaluation device (31) with respect to the device (51) as the signal emitted by the LED status display (21).

8. Method according to claim 6 or 7, **characterized in that** the method additionally comprises the following steps:
- comparison of the detected identification characteristic (27) with identification characteristics stored in the database and identification of a stored identification characteristic that corresponds to the detected identification characteristic (27), whereby a device (51) or a type of device and respectively one or several signals stored in the databank are associated to the stored identification characteristics in the databank,
- comparison of the detected signal with the signals stored in the databank that are associated to the identified stored identification characteristic and identification of a stored signal that corresponds to the detected signal and that is associated to the identified stored identification characteristic,
- display of information by means of the display device (35) of the portable evaluation device (31) about the status that is associated to the identified stored identification characteristic.

9. Device for which the matter is of a safety device that is part of a safety system with a LED status display, **characterized in that** the LED status display is designed to emit signals that cannot be distinguished or not univocally distinguished from one another by the human eye, whereby different signals are due to different statuses of the device, whereby the LED display device is preferably designed to emit the signals as visible light.

10. Portable evaluation device for carrying out the method according to one of the clams 1 to 8.

11. Safety system (11) for carrying out the method according to one of the clams 1 to 8 comprising a device (51) with a LED status display (21) as well as a portable evaluation device (31).

## Revendications

1. Procédé pour l'exploitation de signaux d'un affichage d'état à LED (21) d'un appareil (51), pour lequel il s'agit d'un appareil de sécurité qui est une partie d'un système de sécurité, avec les étapes :
- détection d'un signal émis par l'affichage d'état à LED (21) au moyen d'une caméra (33) d'un appareil d'exploitation portatif (31),
- comparaison du signal détecté avec des signaux mémorisés dans une banque de données, cependant qu'un état est respectivement associé aux signaux mémorisés dans la banque de données et identification d'un signal mémorisé qui correspond au signal détecté et
- affichage d'informations sur l'état qui est associé au signal mémorisé identifié au moyen d'un dispositif d'affichage (35) de l'appareil d'exploitation portatif (31), **caractérisé par le fait que** le signal est émis dans la forme tel qu'il est émis par l'affichage d'état à LED (21), ne peut pas être distingué ou pas de manière univoque par l'oeil humain d'autres signaux qui peuvent être émis par l'affichage d'état à LED (21).

2. Procédé selon la revendication 1, **caractérisé en ce que** le signal est émis par l'affichage d'état à LED (21) complètement en moins de 3 secondes, cependant que l'émission complète du signal ne dure, de préférence, pas plus de 0,01 seconde.

3. Procédé selon la revendication 1 ou 2, **caractérisé en ce que** le signal émis ne peut pas être perçu par l'oeil humain, cependant que !e signal est émis de préférence en forme de rayonnement électromagnétique dans la gamme de longueurs d'onde non visible, en particulier en forme de rayonnement infrarouge.

4. Procédé selon l'une des revendications 1 à 3, **caractérisé en ce que** d'autres actions sont exécutées en plus de l'affichage d'informations sur l'état en fonction du signal mémorisé identifié, cependant que de préférence :
- le signal détecté ou des informations qui en sont dérivées sont transmises par l'appareil d'exploitation (31) à un serveur et/ou
- dans un réseau d'appareils dont l'appareil avec l'affichage d'état à LED fait également partie et qui sont configurés pour coopérer, le type de cette coopération est modifiée et/ou
- une liaison de communication est établie avec une autre personne qui est localisée à un autre endroit que l'utilisateur de l'appareil d'exploitation (31).

5. Procédé selon l'une des revendications 1 à 4, **caractérisé en ce que** les informations sur l'état qui sont affichées au moyen du dispositif d'affichage (35) de l'appareil d'exploitation portatif (31) contiennent des indications sur la manière dont l'état peut être modifié.

6. Procédé selon l'une des revendications 1 à 5, **caractérisé en ce que** l'appareil présente une caractéristique d'identification (27) et le procédé comprend en plus les étapes suivantes :
- détection de la caractéristique d'identification (27),
- affichage des informations sur l'état en fonction de la caractéristique d'identification détectée (27).

7. Procédé selon la revendication 6, **caractérisé en ce que** la caractéristique d'identification (27) peut être détectée au moyen de l'appareil d'exploitation (31) dans la même position de l'appareil d'exploitation portatif (31) par rapport à l'appareil (51) que le signal émis par l'affichage d'état à LED (21).

8. Procédé selon la revendication 6 ou 7, **caractérisé en ce que** le procédé comprend en plus les étapes suivantes :
- comparaison de la caractéristique d'identification détectée (27) avec des caractéristiques d'identification mémorisées dans la banque de données et identification d'une caractéristique d'identification mémorisée qui correspond à la caractéristique d'identification détectée (27), cependant qu'un appareil (51) ou un type d'appareil et respectivement un ou plusieurs des signaux mémorisés dans la banque de données sont respectivement associés aux caractéristiques d'identification mémorisées dans la banque de données,
- comparaison du signal détecté avec les signaux mémorisés dans la banque de données qui sont associés à la caractéristique d'identification identifiée mémorisée et identification d'un signal mémorisé qui correspond au signal détecté et qui est associé à la caractéristique d'identification identifiée,
- affichage d'informations sur l'état qui est associé au signal mémorisé identifié au moyen d'un dispositif d'affichage (35) de l'appareil d'exploitation portatif (31).

9. Appareil pour lequel il s'agit d'un appareil de sécurité qui est une partie d'un système de sécurité avec un affichage d'état à LED, **caractérisé en ce que** l'affichage d'état à LED est configuré pour émettre des signaux qui ne peuvent pas être distingués les uns des autres ou pas de manière univoque par l'oeil humain, cependant que différents signaux sont dus à différents états de l'appareil, cependant que l'affichage d'état à LED est de préférence configuré pour émettre les signaux sous forme de lumière visible.

10. Appareil d'exploitation portatif pour l'exécution du procédé selon l'une des revendications 1 à 8.

11. Système de sécurité (11) pour l'exécution du procédé selon l'une des revendications 1 à 8 contenant un appareil (51) avec un affichage d'état à LED (21) ainsi qu'un appareil d'exploitation portatif (31).
